# EUROPEAN PATENT SPECIFICATION

(11) **EP 4 167 340 B1**
(45) Date of publication and mention of the grant of the patent: **21.10.2026**
(21) Application number: 21838209.1
(22) Date of filing: 08.07.2021
(51) Int. Cl.: H01M 4/04, H01M 4/134, H01M 4/38, H01M 10/04, H01M 10/052, H01M 10/0525, H01M 10/0562, H01M 10/058, H01M 10/0585

(54) **METHOD FOR MANUFACTURING ALL-SOLID-STATE BATTERY COMPRISING SOLID ELECTROLYTE MATERIAL**
VERFAHREN ZUR HERSTELLUNG EINER FESTSTOFFBATTERIE MIT EINEM FESTSTOFFELEKTROLYTMATERIAL
PROCÉDÉ DE FABRICATION D'UNE BATTERIE ENTIÈREMENT SOLIDE COMPRENANT UN MATÉRIAU D'ÉLECTROLYTE SOLIDE

(30) Priority: 08.07.2020 KR 20200084326
(43) Date of publication of application: 19.04.2023
(73) Proprietor: LG Energy Solution, Ltd., Seoul 07335 (KR)
(72) Inventor: JUNG, Hye-Ri, Daejeon 34122 (KR); HAH, Hoe-Jin, Daejeon 34122 (KR); HAN, Hyea-Eun, Daejeon 34122 (KR)
(74) Representative: Goddar, Heinz J.
(86) International application number: PCT/KR2021/008752
(87) International publication number: WO 2022/010292

(56) References cited:
- WO-A1-2020/067107
- JP-A- 2011 142 007
- JP-A- 2014 216 131
- JP-A- 2014 216 131
- KR-A- 20190 056 666
- KR-A- 20200 070 725
- KR-B1- 101 115 397
- KR-B1- 101 115 397
- US-A1- 2011 162 198
- US-A1- 2016 141 713
- US-A1- 2019 157 648

## Description

### TECHNICAL FIELD

The present disclosure relates to a method for manufacturing a solid-state battery including a solid electrolyte material.

### BACKGROUND ART

In general, a solid-state battery is manufactured by stacking a negative electrode, a solid electrolyte membrane and a positive electrode successively, and then pressurizing the resultant structure to carry out interlayer binding. Since such a solid-state battery does not use a liquid electrolyte, it is important that the electrode devices are not spaced apart from each other but are bound compactly with each other to prevent an increase in interfacial resistance. It is also important to reduce porosity through a pressurization process so that ion conductivity may be improved.

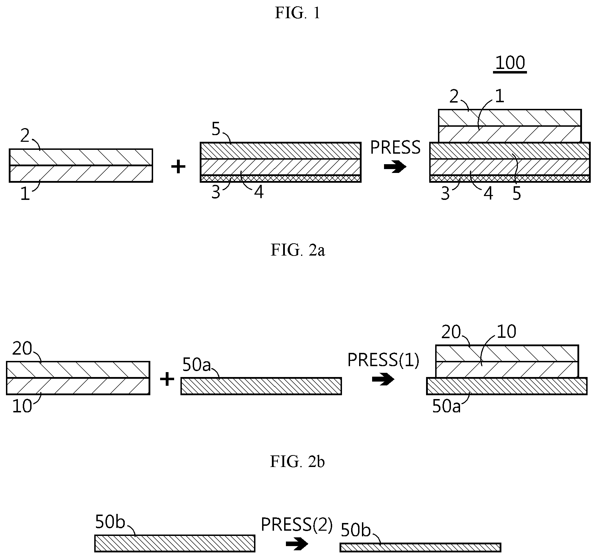

FIG. 1 is a schematic view illustrating a method for manufacturing a solid-state battery according to the related art. Referring to FIG. 1, a positive electrode including a positive electrode active material layer 1 formed on one surface of a positive electrode current collector 2, a solid electrolyte membrane 5 and a negative electrode including a negative electrode active material layer 4 formed on one surface of a negative electrode current collector 3 are stacked successively, and then the resultant structure was pressurized at once to obtain an electrode assembly 100. Since the solid-state battery uses no liquid electrolyte, strong pressure may be applied to allow the electrode active materials to be in close in contact with the solid electrolyte material as an ion conductor and to minimize a vacant space (pore) where no electrochemical reaction occurs. However, when lithium metal is used as a negative electrode material and a solid electrolyte membrane including a sulfide-based solid electrolyte material is used, lithium metal may react with the sulfide-based solid electrolyte material during the pressurization process, resulting in a short-circuit. Thus, there is a problem in that the method shows a low battery production yield, in this case. Meanwhile, when reducing the applied pressure to control the reaction between the negative electrode and the solid electrolyte membrane, there is a problem in that the solid electrolyte membrane may not have a porosity reduced to a desired level.

Under these circumstances, there is a need for a novel process for manufacturing a solid-state battery which prevents the reaction between lithium metal and a sulfide-based solid electrolyte material, allows the solid electrolyte membrane to maintain low porosity, and shows a high battery production yield.

US 2011/162198 A1 discloses a process of manufacturing a solid electrolyte layer including subsequently stacking an electrode layer on at least one side of a solid electrolyte layer to create a laminate.

### DISCLOSURE

### Technical Problem

The present disclosure is designed to solve the problems of the related art, and therefore the present disclosure is directed to provide a method for manufacturing a solid-state battery which prevents the reaction between lithium metal and a solid electrolyte layer to provide a high battery production yield. It will be easily understood that the objects and advantages of the present disclosure may be realized by the means shown in the appended claims and combinations thereof.

### Technical Solution

According to the present invention, there is provided a method for manufacturing a solid-state battery, comprising the steps of:
S1) a first pressurization step of stacking a positive electrode and a first solid electrolyte membrane and pressurizing the resultant structure to obtain a positive electrode member;
S2) a second pressurization step of preparing a second solid electrolyte membrane and pressurizing the second solid electrolyte membrane; and
S3) a third pressurization step of stacking the positive electrode member, the pressurized second solid electrolyte membrane and a negative electrode successively and pressurizing the resultant structure to obtain an electrode assembly,

wherein the third pressurization step is carried out under a pressure lower than the pressure applied in each of the first and the second pressurization steps,
wherein the negative electrode comprises a current collector and an electrode active material layer formed on the surface of the current collector, and the electrode active material layer comprises lithium metal, and
wherein each of the first and the second solid electrolyte membranes comprises a solid electrolyte material, and the solid electrolyte material comprises a sulfide-based solid electrolyte material.

Preferred embodiments of the invention are described in the dependent claims.

### Advantageous Effects

The method for manufacturing a solid-state battery according to the present invention controls the reaction between a negative electrode and a solid electrolyte membrane during a pressurization process for binding the electrode devices with each other. Particularly, when the negative electrode includes lithium metal and the solid electrolyte membrane includes a sulfide-based solid electrolyte material, it is possible to prevent the reaction between lithium metal and the sulfide-based solid electrolyte material. In addition, the solid-state battery obtained by the method for manufacturing a solid-state battery according to the present invention shows low porosity in the positive electrode and the solid electrolyte membrane, prevents generation of a short-circuit by inhibiting the reaction between the solid electrolyte membrane and the negative electrode, lithium metal, and provides an improved battery production yield.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating a method for manufacturing a solid-state battery according to the related art.
FIGS. 2a to 2c are schematic views illustrating the method for manufacturing a solid-state battery according to an embodiment of the present disclosure.
FIG. 3 shows an embodiment of a positive electrode surrounded with a protective member on the edge thereof during the first pressurization step.
FIG. 4 is a graph illustrating the charge/discharge profile of the battery according
to Example 1.

FIG. 5 is a graph illustrating the charge/discharge profile of the battery according to Comparative Example 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression 'a part includes an element' does not preclude the presence of any additional elements but means that the part may further include the other elements, unless otherwise stated.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

The present disclosure relates to a method for manufacturing a solid-state battery using a solid electrolyte as an electrolyte material. According to an embodiment of the present disclosure, the solid-state battery may be a lithium-ion secondary battery.

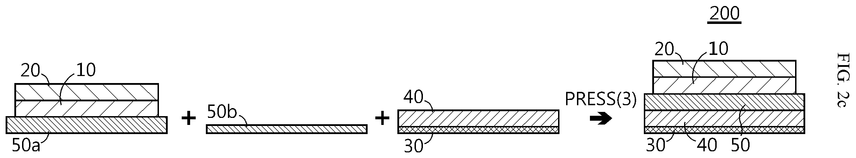

FIGS. 2a to 2c are schematic views illustrating the method for manufacturing a solid-state battery according to an embodiment of the present disclosure. Hereinafter, the method for manufacturing a solid-state battery according to an embodiment of the present disclosure will be explained in more detail with reference to the accompanying drawings.

First, a positive electrode, a first solid electrolyte membrane, a second solid electrolyte membrane and a negative electrode are prepared.

According to an embodiment of the present disclosure, the first and the second solid electrolyte membranes are disposed between the negative electrode and the positive electrode, insulate the negative electrode and the positive electrode electrically from each other, and are provided as ion transport channels between the negative electrode and the positive electrode. Each of the solid electrolyte membranes may be prepared in the form of a sheet including a solid electrolyte material. If necessary, each solid electrolyte membrane may further include a binder resin for the purpose of the shape-retaining stability of the membrane.

According to the present disclosure, each of the first and the second solid electrolyte membranes includes a sulfide-based solid electrolyte material, and may include at least one selected from a sulfide-based solid electrolyte material and an oxide-based solid electrolyte material. According to an embodiment of the present disclosure, the first and the second solid electrolyte membranes may include a sulfide-based solid electrolyte material alone as a solid electrolyte material.

According to the present disclosure, preparation of the solid electrolyte membrane is not limited to a particular method, as long as the solid electrolyte membrane may be prepared in the form of a sheet including a solid electrolyte material. For example, the solid electrolyte membrane may be prepared by introducing a solid electrolyte material to a solvent to prepare slurry for forming an electrolyte membrane, and applying the slurry onto a release film, followed by drying. The release film is removed from the solid electrolyte membrane, before the positive electrode and the solid electrolyte membrane are stacked in the step as described hereinafter.

According to the present disclosure, the first solid electrolyte membrane may be the same as or different from the second solid electrolyte membrane.

According to an embodiment of the present disclosure, the solvent used for preparing the solid electrolyte membrane may be a nonpolar solvent. The sulfide-based solid electrolyte ingredient may undergo deterioration of physical properties, such as degradation of ion conductivity, when it is in contact with a polar solvent. Therefore, according to the present disclosure, a nonpolar solvent may be used as a solvent for manufacturing a battery. The nonpolar solvent may include those having a polarity index of 0-3 and/or having a dielectric constant of less than 5. When using such a nonpolar solvent, it is possible to prevent degradation of the ion conductivity of a sulfide-based solid electrolyte, caused by the use of a polar solvent. Non-limiting examples of the nonpolar solvent include pentane, cyclohexane, toluene, benzene, xylene, hexane, anisole, heptane, chloroform, diethyl ether, butyl butyrate, or the like. Such solvents may be used alone or in combination.

The negative electrode includes a negative electrode current collector 30 and a negative electrode active material layer 40 formed on the surface of the negative electrode current collector. The negative electrode active material layer includes lithium metal as a negative electrode active material. The negative electrode active material layer may be provided in the form of lithium metal foil stacked on the surface of the current collector. In a variant, the negative electrode active material layer may be formed through the electrodeposition of a metal on the surface of the current collector, or by a chemical or physical vapor deposition process.

The positive electrode includes a positive electrode current collector 20 and a positive electrode active material layer 10 formed on the surface of the collector. The active material layer may include a plurality of electrode active material particles and a solid electrolyte material. According to an embodiment of the present disclosure, the positive electrode may further include at least one of a conductive material and a binder resin, if necessary. In addition, the positive electrode may further include various additives in order to supplement or improve the electrochemical properties. According to the present disclosure, manufacture of the positive electrode is not limited to a particular method, as long as the positive electrode may be prepared in the form of a sheet including a positive electrode active material and a solid electrolyte. For example, the positive electrode may be prepared by introducing a positive electrode active material and a solid electrolyte material to a solvent to prepare slurry for forming a positive electrode, and applying the slurry onto a current collector, followed by drying.

The positive electrode active material is not limited to a particular ingredient, as long as it can be used as a positive electrode active material for a lithium-ion secondary battery. Non-limiting examples of the positive electrode active material include any one selected from layered compounds, such as lithium manganese composite oxide (LiMn₂O₄, LiMnO₂, or the like), lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1), or Li₂Mn₃MO₈ (wherein M is Fe, Co, Ni, Cu or Zn); LiMn₂O₄ in which Li is partially substituted with an alkaline earth metal ion; disulfide compounds; and Fe₂(MoO₄)₃; or a mixture of two or more of them. According to the present disclosure, the positive electrode may include at least one of a polymeric solid electrolyte, an oxide-based solid electrolyte and a sulfide-based solid electrolyte, as a solid electrolyte material.

Next, the positive electrode and the first solid electrolyte membrane 50a are stacked, and a pressurization step (first pressurization step) is carried out to prepare a positive electrode member. The positive electrode includes a positive electrode current collector 20 and a positive electrode active material layer 10 formed on the surface of the current collector. The positive electrode member is a product obtained by allowing the positive electrode and the first solid electrolyte membrane to be in close contact with each other and/or to be bound to each other. During the pressurization, the first solid electrolyte membrane is stacked in such a manner that it may face the positive electrode active material layer of the positive electrode. The first pressurization step may be carried out at room temperature. As used herein, the term 'room temperature' means a temperature controlled in a predetermined range within a range of 15-30°C. For example, the term 'room temperature' may refer to a temperature ranging from 18°C to 25°C. The pressure applied in the pressurization step may be controlled to about 300-600 MPa. According to an embodiment of the present disclosure, the pressurization step may retain a pressure of preferably about 450 MPa or more within the above-defined range with a view to reduction of the porosity of the positive electrode and the first solid electrolyte membrane. For example, the pressurization may be controlled to a pressure of about 450-550 MPa. Meanwhile, the pressurization may be carried out for 1-30 minutes. Meanwhile, each of the positive electrode and the first solid electrolyte membrane obtained after the first pressurization step preferably maintains a porosity of 45-60 vol%. However, the pressure or time in the first pressurization step is not limited to a particular range, but may be controlled suitably considering the thickness of the positive electrode and/or the thickness of the solid electrolyte membrane, a desired level of porosity, or the like.

In addition, the second solid electrolyte membrane 50b is subjected to a pressurization step (second pressurization step).

The second pressurization step may be carried out at room temperature (15-30°C). The pressure applied in the pressurization step may be controlled to about 300-600 MPa. According to an embodiment of the present disclosure, the pressurization step may retain a pressure of preferably about 450 MPa or more within the above-defined range with a view to reduction of the porosity of the second solid electrolyte membrane. For example, the pressurization may be controlled to a pressure of about 450-550 MPa. Meanwhile, the pressurization may be carried out for 1-30 minutes. Meanwhile, the second solid electrolyte membrane obtained after the second pressurization step preferably maintains a porosity of 45-60 vol%. However, the pressure or time in the second pressurization step is not limited to a particular range, but may be controlled suitably considering the thickness of the second solid electrolyte membrane or a desired level of porosity.

Then, the positive electrode member and the negative electrode are stacked successively, and a pressurization step (third pressurization step) is carried out to obtain an electrode assembly 200. The negative electrode includes a negative electrode current collector 30 and a negative electrode active material layer 40 formed on the surface of the negative electrode current collector.

According to the present disclosure, the pressure applied in the third pressurization step is controlled to be lower than the pressure applied in each of the first pressurization step and the second pressurization step. In the third pressurization step, the first solid electrolyte membrane 50a and the second solid electrolyte membrane 50b are bound to each other to form a single solid electrolyte membrane 50. In other words, the first and the second solid electrolyte membranes are combined with each other through the binding of the boundary portions facing each other, and thus the boundary portions become unclear or are eliminated completely, thereby forming a single solid electrolyte membrane 50.

The third pressurization step may be carried out at room temperature (15-30°C). The pressure applied in the third pressurization step is controlled to about 100-300 MPa, with the proviso that the pressure is lower than the pressure applied in the second pressurization step. Meanwhile, the third pressurization step may be carried out for 1-5 minutes. Meanwhile, the porosity of the single solid electrolyte membrane provided through the binding of the first and the second solid electrolyte membranes in the electrode assembly obtained after the third pressurization step is 1-10 vol%. In addition, the porosity of the positive electrode in the electrode assembly is maintained preferably at a level of 1-20 vol%.

Meanwhile, according to the present disclosure, the porosity may be determined by using the relationship between the true density and the apparent density, i.e. [(1-true density)/(apparent density)], weight and thickness of the test object.

The obtained electrode assembly may have a reduced porosity and improved ion conductivity, since the solid electrolyte membrane is subjected to pressurization steps twice. Preferably, the solid electrolyte membrane may have a porosity controlled to 5 vol% or less. In addition, the solid electrolyte membrane and the negative electrode are bound to each other through the third pressurization step, wherein the pressure applied in the third pressurization step is lower than the pressure applied in each of the first and the second pressurization steps. Thus, since the lamination process is carried out under such a low pressure condition, it is possible to inhibit the reaction between the negative electrode and the solid electrolyte membrane.

According to the present disclosure, the pressurization step may be any process, as long as it can ensure the binding between the positive electrode and the solid electrolyte membrane and a suitable level of porosity. According to an embodiment of the present disclosure, the pressurization may be carried out by a process selected suitably from known pressurization processes, such as roll pressing, compressive pressing and cold isotatic pressing (CIP), and is not limited to any particular process.

Meanwhile, according to an embodiment of the present disclosure, a protective member may be disposed on the edge of the positive electrode in the first pressurization step. In general, a solid electrolyte membrane is prepared to have a larger area than the area of an electrode in order to insulate a positive electrode and a negative electrode electrically from each other and to prevent a short-circuit between both electrodes, and the positive electrode and the negative electrode are disposed inside of the solid electrolyte membrane during the lamination of the electrodes and the solid electrolyte membrane. Therefore, since the positive electrode has a smaller area as compared to the solid electrolyte membrane, the surface of the solid electrolyte membrane may be damaged by the edge of the positive electrode during the pressurization step. Thus, when a protective member capable of compensating for such a difference in area between the positive electrode and the solid electrolyte membrane is disposed in the whole or at least a part of the edge of the positive electrode, and then the pressurization step is carried out, it is possible to prevent the solid electrolyte membrane from being damaged. Meanwhile, according to an embodiment of the present disclosure, the protective member may be removed after the pressurization step.

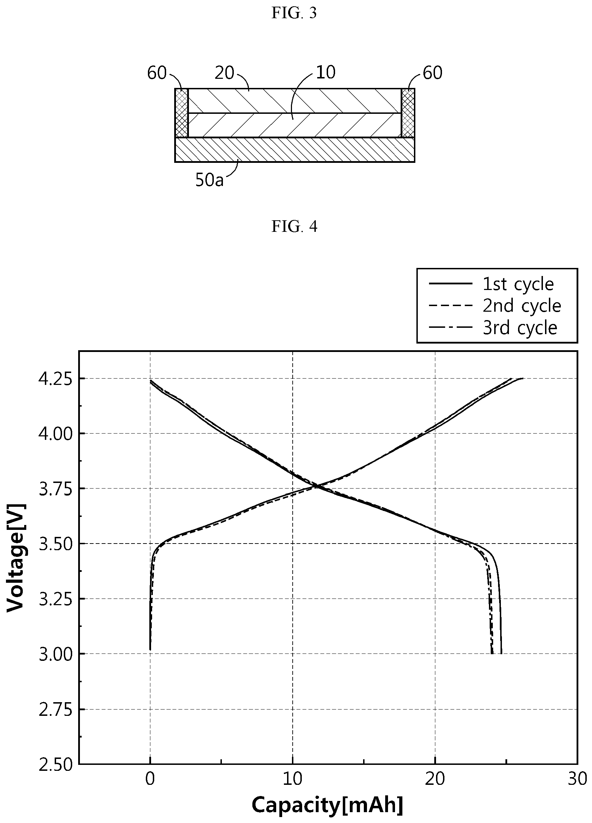

FIG. 3 shows an embodiment of a protective member 60 disposed at a portion corresponding to a difference in area between a positive electrode and a solid electrolyte membrane. When the protective member is disposed, the lateral side portion of the protective member and that of the positive electrode may be disposed in such a manner that they may not be spaced apart from each other but may touch each other. More preferably, the external dimension of the protective member may be the same as or larger than the dimension of the solid electrolyte membrane so that the surface of the solid electrolyte membrane exposed due to the difference in area from the positive electrode may be totally covered with the protective member. In other words, it is preferred that the protective member is disposed in such a manner that the surface of the solid electrolyte membrane may not be pressed and deformed by the external border or edge of the protective member. In addition, the protective member preferably has the same height as the positive electrode. When the protective member has the same height as the positive electrode, it is possible to apply uniform pressure to the whole of the solid electrolyte membrane through the protective member and the positive electrode during the pressurization step.

According to an embodiment of the present disclosure, the material of the protective member is not particularly limited, as long as it causes no damage upon the solid electrolyte membrane during the pressurization and can be removed after the pressurization, while not causing damages upon the positive electrode and the solid electrolyte membrane. For example, the protective member may include an insulating polymer resin. According to an embodiment of the present disclosure, the insulating polymer resin may include an elastic material, such as styrene butadiene rubber (SBR).

Meanwhile, according to the present disclosure, the current collector includes a metal plate having electrical conductivity and may be one selected suitably depending on polarity of electrodes known in the field of secondary batteries.

According to the present disclosure, the conductive material is added generally in an amount of 1-30 wt% based on the total weight of the mixture including the electrode active material. The conductive material is not particularly limited, as long as it causes no chemical change in the corresponding battery and has conductivity. For example, the conductive material includes any one selected from: graphite, such as natural graphite or artificial graphite; carbon black, such as carbon black, acetylene black, Ketjen black, channel black, furnace black, lamp black or thermal black; conductive fibers, such as carbon fibers or metallic fibers; metal powder, such as carbon fluoride, aluminum or nickel powder; conductive whisker, such as zinc oxide or potassium titanate; conductive metal oxide, such as titanium oxide; and conductive materials, such as polyphenylene derivatives, or a mixture of two or more of them.

According to the present disclosure, the binder resin is not particularly limited, as long as it is an ingredient which assists binding of the electrode active material with the conductive material, and binding to the current collector. Particular examples of the binder resin include polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer terpolymer (EPDM), sulfonated EPDM, styrene butadiene rubber, fluororubber, various copolymers, or the like. In general, the binder resin may be used in an amount of 1-30 wt%, or 1-10 wt%, based on 100 wt% of electrode active material layer.

Meanwhile, according to the present disclosure, each electrode active material layer may include at least one additive, such as an oxidation stabilizing additive, a reduction stabilizing additive, a flame retardant, a heat stabilizer, an anti-fogging agent, or the like, if necessary.

According to the present disclosure, the sulfide-based solid electrolyte contains sulfur (S), has conductivity of metal ions that belong to Group1 or Group 2 in the Periodic Table, and may include Li-P-S glass or Li-P-S glass ceramic. Non-limiting examples of the sulfide-based solid electrolyte include at least one of Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, or the like. However, the scope of the present disclosure is not limited thereto.

In addition, an oxide-based solid electrolyte contains oxygen (O), has conductivity of metal ions that belong to Group 1 or Group 2 in the Periodic Table. Non-limiting examples of the oxide-based solid electrolyte include at least one of LLTO compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP compounds, LATP compounds, Li₁₊ₓTi₂₋ₓAlₓSi_{y}(PO₄)_{3-y} (wherein 0 ≤ x ≤ 1, 0 ≤ y ≤ 1), LiAlₓZr₂₋ₓ(PO₄)₃ (wherein 0 ≤ x ≤ 1, 0 ≤ y ≤ 1), LiTiₓZr₂₋ₓ(PO₄)₃ (wherein 0 ≤ x ≤ 1, 0 ≤ y ≤ 1), LISICON compounds, LIPON compounds, perovskite compounds, NASICON compounds and LLZO compounds. However, the scope of the present disclosure is not limited thereto.

Referring to the solid electrolyte material, in the case of a positive electrode, an electrolyte material having high oxidation stability may be used as a solid electrolyte. In addition, in the case of a negative electrode, an electrolyte having high reduction stability may be used as a solid electrolyte. However, the scope of the present disclosure is not limited thereto. Since the solid electrolyte mainly functions to conduct lithium ions in the electrodes, any material having a high ion conductivity, such as 10⁻⁷ S/Cm or more, or 10⁻⁵ S/cm or more, may be used, and the solid electrolyte material is not limited to any specific ingredient.

There is provided a secondary battery having the above-described structure. There are also provided a battery module including the secondary battery as a unit cell, a battery pack including the battery module, and a device including the battery pack as a power source. Herein, particular examples of the device may include, but are not limited to: power tools driven by an electric motor; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

Examples will be described more fully hereinafter so that the present disclosure can be understood with ease. However, the following examples are for illustrative purposes only and the scope of the present disclosure is not limited thereto.

### [Examples]

### (1) Manufacture of Electrode

### Example 1

First, LiNi_{0.8}Co_{0.1}Mn_{0.1}O₂ as a positive electrode active material, Li₂S-P₂S₅ as a solid electrolyte, nitrile-butadiene rubber (NBR) as a binder and vapor grown carbon fibers (VGCF) as a conductive material were introduced to anisole at a weight ratio of 75.5:22.1:1.5:1 to prepare slurry (solid content 70 wt%) for forming a positive electrode active material layer. The slurry was applied to one surface of aluminum foil (thickness: about 10 µm) and dried at 60°C for 6 hours to prepare a positive electrode.

Next, Li₂S-P₂S₅ as a solid electrolyte and NBR as a binder were introduced to anisole at a weight ratio of 95:5 to prepare slurry (solid content 60 wt%) for forming a solid electrolyte membrane. The slurry was prepared by mixing the ingredients in Thinkky mixer for 1 minute at a rate of 2000 rpm. The slurry was applied to one surface of a release sheet made of polyethylene terephthalate and dried overnight at room temperature under ambient pressure, and then the release sheet was removed to prepare a first solid electrolyte membrane. In addition, a second solid electrolyte membrane was prepared in the same manner as described above. Each of the first solid electrolyte membrane and the second solid electrolyte membrane had a thickness of 30 µm.

Then, a negative electrode was prepared. The negative electrode was prepared by attaching lithium metal foil having a thickness of 20 µm to the surface of a nickel foil current collector having a thickness of 10 µm.

After that, the positive electrode and the first solid electrolyte membrane were stacked, and the resultant structure was pressurized under a pressure of 500 MPa for 5 minutes so that the positive electrode might be laminated with the first solid electrolyte membrane, thereby providing a laminate. In the resultant laminate, the positive electrode had a porosity of 15 vol%, and the first solid electrolyte membrane had a porosity of 50 vol%. In addition, the second solid electrolyte membrane was pressurized at a pressure of 500 MPa for 5 minutes. The resultant second solid electrolyte membrane had a porosity of 50vol%. Then, the laminate, the second solid electrolyte membrane and the negative electrode were stacked successively, and the resultant structure was pressurized under 200 MPa for 5 minutes to obtain an electrode assembly. In the resultant electrode assembly, the positive electrode had a porosity of 15 vol%, and the solid electrolyte membrane had a porosity of 5 vol%. Each of the pressurizations was carried out by using a cold isotatic pressing (CIP) machine.

### Example 2

An electrode assembly was obtained in the same manner as Example 1, except that a pressure of 450 MPa was applied in the first pressurization step and the second pressurization step, and a pressure of 100 MPa was applied in the third pressurization step.

### Comparative Example 1

A positive electrode, a negative electrode and a solid electrolyte membrane (60 µm) were prepared and stacked successively in the same manner as Example 1. The resultant structure was pressurized under a pressure of 500 MPa for 5 minutes to obtain an electrode assembly. In the resultant electrode assembly, the positive electrode had a porosity of 20 vol%, and the solid electrolyte membrane had a porosity of 10 vol%. The pressurization was carried out by using a cold isotatic pressing (CIP) machine.

### Comparative Example 2

An electrode assembly was obtained in the same manner as Comparative Example 1, except that a pressure of 450 MPa was applied.

### (2) Results of Comparison of Electrochemical Properties

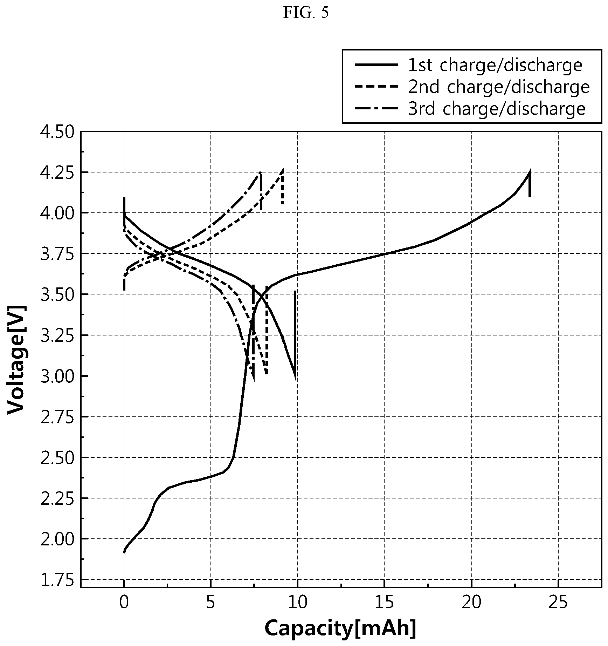

A solid-state battery was obtained by using each of the electrode assemblies according to Examples 1 and 2 and Comparative Examples 1 and 2. Each battery was charged/discharged three times repeatedly to determine the open circuit voltage (OCV). Each battery was charged in a constant current-constant voltage (CC-CV) mode at 0.1 C to 4.25 V (0.01 C cut off), and discharged at 0.1 C to 3 V. The open circuit voltage was determined by using a voltmeter available from Hioki. The results of initial charge/discharge of Examples 1 and 2 and Comparative Examples 1 and 2 are shown in the following Table 1. In the case of Comparative Examples 1 and 2, each battery shows a lower charge/discharge efficiency (about 43%), which suggests that the battery quality is degraded. Meanwhile, in the case of Examples 1 and 2, each battery shows a high charge/discharge efficiency of up to about 93%. In addition, FIG. 4 (Example 1) and FIG. 5 (Comparative Example 1) show the first to the third charge/discharge profiles of Example 1 and Comparative Example 1. It can be seen from the results that the battery according to Comparative Example 1 shows a high irreversible capacity and cannot realize a sufficient discharge capacity, and thus provides lower battery quality as compared to Example 1.

**[Table 1]**

| | Example 1 | Example 2 | Comp. Ex. 1 | Comp. Ex. 2 |
|---|---|---|---|---|
| OCV (V) | 3.012 | 3.013 | 1.853 | 1.921 |

## Claims

1. A method for manufacturing a solid-state battery, comprising the steps of:
S1) a first pressurization step of stacking a positive electrode and a first solid electrolyte membrane and pressurizing the resultant structure to obtain a positive electrode member;
S2) a second pressurization step of preparing a second solid electrolyte membrane and pressurizing the second solid electrolyte membrane; and
S3) a third pressurization step of stacking the positive electrode member, the pressurized second solid electrolyte membrane and a negative electrode successively and pressurizing the resultant structure to obtain an electrode assembly,
wherein the third pressurization step is carried out under a pressure lower than the pressure applied in each of the first and the second pressurization steps,
wherein the negative electrode comprises a current collector and an electrode active material layer formed on the surface of the current collector, and the electrode active material layer comprises lithium metal, and
wherein each of the first and the second solid electrolyte membranes comprises a solid electrolyte material, and the solid electrolyte material comprises a sulfide-based solid electrolyte material.

2. The method for manufacturing a solid-state battery according to claim 1, wherein the first pressurization step is carried out at a temperature of 15-30°C under a pressure of 300-600 MPa.

3. The method for manufacturing a solid-state battery according to claim 1, wherein the first solid electrolyte membrane in the positive electrode member has a porosity of 45-60 vol%.

4. The method for manufacturing a solid-state battery according to claim 1, wherein the second pressurization step is carried out at a temperature of 15-30°C under a pressure of 300-600 MPa.

5. The method for manufacturing a solid-state battery according to claim 1, wherein the third pressurization step is carried out under a pressure of 100-300 MPa.

6. The method for manufacturing a solid-state battery according to any one of claims 1 to 5, wherein the positive electrode is surrounded with a protective member on the edge thereof in the first pressurization step so that the solid electrolyte membrane may be prevented from being damaged.

## Patentansprüche

1. Verfahren zur Herstellung einer Festkörperbatterie, umfassend die Schritte:
S1) einen ersten Druckbeaufschlagungsschritt des Stapelns einer positiven Elektrode und einer ersten Festelektrolytmembran und des Druckbeaufschlagens der resultierenden Struktur, um ein positives Elektrodenelement zu erhalten;
S2) einen zweiten Druckbeaufschlagungsschritt des Herstellens einer zweiten Festelektrolytmembran und des Druckbeaufschlagens der zweiten Festelektrolytmembran; und
S3) einen dritten Druckbeaufschlagungsschritt des aufeinanderfolgenden Stapelns des positiven Elektrodenelements, der druckbeaufschlagten zweiten Festelektrolytmembran und einer negativen Elektrode und des Druckbeaufschlagens der resultierenden Struktur, um eine Elektrodenanordnung zu erhalten,
wobei der dritte Druckbeaufschlagungsschritt unter einem Druck durchgeführt wird, der niedriger ist als der Druck, der in jedem des ersten und des zweiten Druckbeaufschlagungsschritts ausgeübt wird,
wobei die negative Elektrode einen Stromabnehmer und eine Elektrodenaktivmaterialschicht umfasst, die auf der Oberfläche des Stromabnehmers gebildet ist, und die Elektrodenaktivmaterialschicht Lithiummetall umfasst, und
wobei jede der ersten und der zweiten Festelektrolytmembran ein Festelektrolytmaterial umfasst und das Festelektrolytmaterial ein Festelektrolytmaterial auf Sulfidbasis umfasst.

2. Verfahren zur Herstellung einer Festkörperbatterie nach Anspruch 1, wobei der erste Druckbeaufschlagungsschritt bei einer Temperatur von 15-30 °C unter einem Druck von 300-600 MPa durchgeführt wird.

3. Verfahren zur Herstellung einer Festkörperbatterie nach Anspruch 1, wobei die erste Festelektrolytmembran in dem positiven Elektrodenelement eine Porosität von 45-60 Vol.-% aufweist.

4. Verfahren zur Herstellung einer Festkörperbatterie nach Anspruch 1, wobei der zweite Druckbeaufschlagungsschritt bei einer Temperatur von 15-30 °C unter einem Druck von 300-600 MPa durchgeführt wird.

5. Verfahren zur Herstellung einer Festkörperbatterie nach Anspruch 1, wobei der dritte Druckbeaufschlagungsschritt unter einem Druck von 100-300 MPa durchgeführt wird.

6. Verfahren zur Herstellung einer Festkörperbatterie nach einem der Ansprüche 1 bis 5, wobei die positive Elektrode in dem ersten Druckbeaufschlagungsschritt an ihrem Rand mit einem Schutzelement umgeben ist, so dass verhindert werden kann, dass die Festelektrolytmembran beschädigt wird.

## Revendications

1. Procédé de fabrication d'une batterie tout solide, comprenant les étapes suivantes :
S1) une première étape de pressurisation comportant l'empilement d'une électrode positive et d'une première membrane d'électrolyte solide, et la mise sous pression de la structure résultante pour obtenir un élément d'électrode positive ;
S2) une deuxième étape de pressurisation comportant la préparation d'une deuxième membrane d'électrolyte solide, et la mise sous pression de la deuxième membrane d'électrolyte solide ; et
S3) une troisième étape de pressurisation comportant l'empilement tout à tour de l'élément d'électrode positive, de la deuxième membrane d'électrolyte solide pressurisée, et d'une électrode négative, puis la mise sous pression de la structure résultante pour obtenir un ensemble d'électrode,
la troisième étape de pressurisation étant effectuée sous une pression inférieure à la pression appliquée à chacune des première et deuxième étapes de pressurisation,
l'électrode négative comprenant un collecteur de courant et une couche de matière active d'électrode formée sur la surface du collecteur de courant, et la couche de matière active d'électrode comprenant du métal lithium, et
chacune des première et deuxième membranes d'électrolyte solide comprenant une matière d'électrolyte solide, et la matière d'électrolyte solide comprenant une matière d'électrolyte solide à base de sulfure.

2. Procédé de fabrication d'une batterie tout solide selon la revendication 1, la première étape de pressurisation étant effectuée à une température de 15 à 30°C, sous une pression de 300-600 MPa.

3. Procédé de fabrication d'une batterie tout solide selon la revendication 1, la première membrane d'électrolyte solide dans l'élément d'électrode positive présentant une porosité comprise entre 45 et 60% en volume

4. Procédé de fabrication d'une batterie tout solide selon la revendication 1, la deuxième étape de pressurisation étant effectuée à une température de 15 à 30°C, sous une pression de 300-600 MPa.

5. Procédé de fabrication d'une batterie tout solide selon la revendication 1, la troisième étape de pressurisation étant effectuée sous une pression de 100-300 MPa.

6. Procédé de fabrication d'une batterie tout solide selon une quelconque des revendications 1 à 5, l'électrode positive étant entourée d'un élément de protection sur son bord à la première étape de pressurisation de façon à assurer la prévention d'un endommagement de l'élément d'électrode solide.
